# EUROPEAN PATENT SPECIFICATION

(11) **EP 3 351 858 B1**
(45) Date of publication and mention of the grant of the patent: **23.08.2023**
(21) Application number: 17193988.7
(22) Date of filing: 29.09.2017
(51) Int. Cl.: F24C 15/06, F24C 7/08

(54) **HOUSEHOLD APPLIANCE HAVING A CONTROL PANEL**
HAUSHALTSGERÄT MIT EINEM BEDIENFELD
APPAREIL MÉNAGER COMPRENANT UN PANNEAU DE COMMANDE

(30) Priority: 05.10.2016 KR 20160128195
(43) Date of publication of application: 25.07.2018
(73) Proprietor: Samsung Electronics Co., Ltd., Suwon-si, Gyeonggi-do (KR)
(72) Inventor: Heo, Soo Hyoung, Suwon-si, Gyeonggi-do (KR); Kim, Hyung-Jin, Suwon-si, Gyeonggi-do (KR); Kim, Young Tae, Suwon-si, Gyeonggi-do (KR); Lee, Kyung Hwan, Suwon-si, Gyeonggi-do (KR); Kim, Yeong Hyeok, Seoul (KR)
(74) Representative: Gulde & Partner

(56) References cited:
- EP-A2- 1 160 513
- EP-A2- 1 898 157
- CN-U- 202 158 605
- DE-A1- 10 350 586
- DE-A1-102011 076 701
- DE-A1-102011 087 756
- US-A- 6 065 820
- US-A1- 2013 314 856
- US-B1- 6 724 633

## Description

### BACKGROUND

### 1. Field

Embodiments of the present disclosure relate to a household appliance including a control panel.

### 2. Description of the Related Art

Generally, household appliances, such as a washing machine, a dishwasher, an oven, and the like, include control panels configured to control the household appliances. There are a variety of household appliances having a control panel, and particularly, a cooking apparatus having a form in which a cooktop and an oven are combined will be described as an example thereof.

The control panel is a user interface provided with a plurality of buttons, a keypad, and the like to allow a user to set a desired cooking mode or various conditions necessary for cooking. The control panel also includes a display device and the like to allow the user to check a currently set cooking mode, a cooking condition, a cooking state, or the like.

The cooking apparatus includes a body in a cabinet type, a cooking chamber provided in the body, a door provided at a front surface of the body to open or close the cooking chamber. In this case, electricity or gas may be used as an energy source to heat food.

A control panel may be disposed on one side of a body of an electronic product such as a cooking apparatus or the like. A control panel of a cooking apparatus may be disposed on an upper portion of a front surface of a body.

Household appliances and door or other handles are disclosed in US 2013/314856 A1, US 6,724,633 B1, DE 103 50 586 A1, US 6,065,820, CN 202 158 605 U and EP 1 898 157 A2.

### SUMMARY

Therefore, it is an aspect of the present invention to provide a household appliance including a control panel.

It is an aspect of the present invention to provide a household appliance including a control panel formed of an aluminum material to improve durability thereof.

It is still another aspect of the present invention to provide a household appliance including a control panel formed of materials matching each other to improve a design thereof.

It is yet another aspect of the present invention to provide a household appliance capable of simplifying a method of manufacturing a control panel and reducing a production time and costs. Additional aspects of the disclosure will be set forth in part in the description which follows and, in part, will be obvious from the description, or may be learned by practice of the disclosure.

The present general disclosure not supported by the invention includes a household appliance, the appliance including a body and a control panel provided on an outer side of the body, wherein the control panel includes: a first panel formed by a process of extruding an aluminum (Al) material and provided with at least one surface thereof exposed to an outside thereof; and a second panel provided to be coupled to the first panel and formed of the same material as the first panel.

This first panel obtained by extruding the aluminum (Al) material may be sequentially subject to a heat treatment, a cutting process, and a computer numerical control (CNC) process, and then may be remolded.

The first panel may be molded by performing at least one process of a hairline process and an anodizing process after performing the CNC process.

The first panel may be formed by performing at least one process of an aluminum extrusion process and an aluminum bending process.

This second panel mentioned above obtained by extruding the aluminum (Al) material may be sequentially subject to a heat treatment, a cutting process, and a computer numerical control (CNC) process, and then may be remolded.

The second panel may be molded by performing at least one process of a hairline process and an anodizing process after performing the CNC process.

The first panel and the second panel may be assembled through at least one method among welding, bonding, riveting, press-fitting, and screwing methods.

The first panel may include: a plurality of first installation holes formed so that levers are mounted on the first panel; and a second installation hole formed to mount a display panel on the first panel. The first panel may further include a second panel coupler formed to be coupled to the second panel.

In accordance with the present invention, a household appliance according to claim 1 is provided. In accordance with the present invention, the first panel 110 is a control panel, and the second panel 120 is a control panel bracket, wherein the present invention involves two of these control panel brackets provided to different end portions of the control panel.

According to the invention, the control panel and the control panel bracket obtained by extruding the aluminum (Al) material may be sequentially subject to a heat treatment, a cutting processing and a computer numerical control (CNC) process, and then may be remolded.

According to the invention, the control panel and the control panel bracket are formed by an aluminum extrusion process.

The control panel may be formed by performing at least one process of a hairline process and an anodizing process after performing the CNC process.

The control panel brackets may be formed by at least one process of a hairline process and an anodizing process after performing the CNC process.

The control panel bracket may include: a bracket body; and a fixing portion formed on an end portion of the bracket body.

The control panel and the control panel brackets may be assembled through at least one method among welding, bonding, riveting, press-fitting, and screwing methods.

The control panel may include: a plurality of first installation holes formed so that levers are mounted on the first panel; and a second installation hole formed to mount a display panel on the first panel.

In accordance with another aspect of the invention, a method of manufacturing a control panel for a household appliance according to claim 10 is provided.

All aspects of the disclosure will become apparent and more readily appreciated from the following description of the embodiments, taken in conjunction with the accompanying drawings of which:
FIG. 1 is a perspective view illustrating a cooking apparatus according to one embodiment of the present invention;
FIG. 2 is an exploded perspective view illustrating a control panel of the cooking apparatus according to one embodiment of the present invention;
FIG. 3 is an exploded perspective view illustrating the control panel according to one embodiment of the present invention;
FIG. 4 is a view illustrating an aluminum extrusion process included in a method of manufacturing a control panel according to one embodiment of the present invention;
FIG. 5 is a view illustrating a cutting process included in the method of manufacturing a control panel according to one embodiment of the present invention;
FIG. 6 is a view illustrating a computer numerical control (CNC) process included in the method of manufacturing a control panel according to one embodiment of the present
FIG. 7 is a flowchart illustrating the method of manufacturing a control panel according to one embodiment of the present invention; and
FIG. 8 is a perspective view illustrating a dishwasher to which the control panel according to one embodiment of the present invention is applied.

### DETAILED DESCRIPTION

Embodiments described in the description and configurations shown in the drawings are only one preferable example of the present disclosure.

Also, identical marks or numbers in the drawings of the description denote components or elements configured to perform substantially identical functions.

Also, the terminology used herein is for the purpose of describing particular embodiments only and is not intended to limit the disclosure. As used herein, the singular forms "a," "an," and "the" are intended to include the plural forms as well, unless the context clearly indicates otherwise. It should be further understood that the terms "include," "including," "have," and/or "having" specify the presence of stated features, integers, steps, operations, elements, components, and/or groups thereof, but do not preclude the presence or addition of one or more other features, integers, steps, operations, elements, components, and/or groups thereof.

Also, it should be understood that, although the terms first, second, etc. may be used herein to describe various elements, these elements are not limited by these terms, and these terms are only used to distinguish one element from another. For example, a first element could be termed a second element, and, similarly, a second element could be termed a first element without departing from the scope of the present disclosure. As used here, the term "and/or" includes combinations of one or more of a plurality of associated listed items or any and all items among the plurality of associated listed items.

Hereinafter, embodiments according to the present invention will be described in detail with reference to the accompanying drawings. The embodiment of the present invention is applicable to all household appliances including control panels. A household appliance may include a cooking apparatus to which a control panel is applied. The household appliance may refer to the cooking apparatus.

The control panel may include a user interface provided with a plurality of buttons, a keypad, or the like so that a user may set various conditions of a product.

Hereinafter, the cooking apparatus will be described as one example.

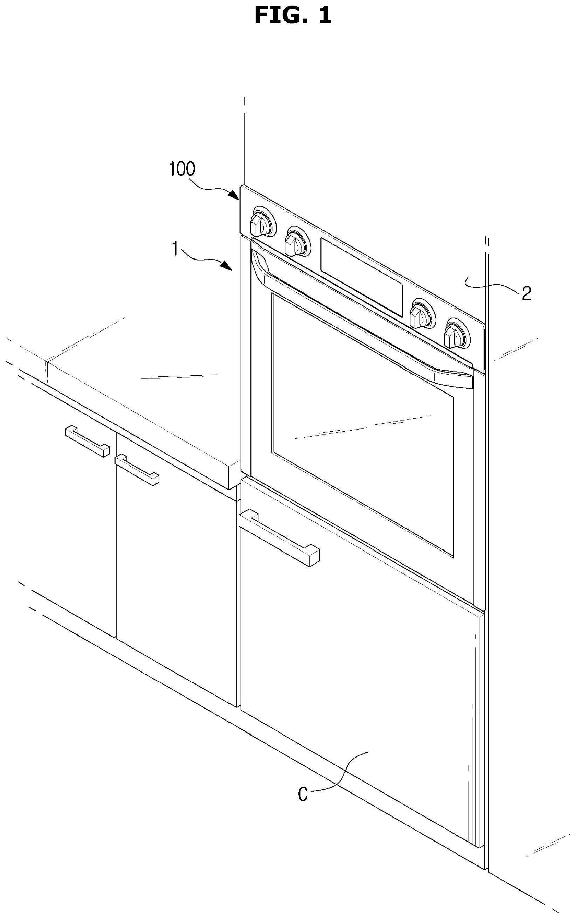

A front surface and a forward direction described hereinafter are referred to as a front surface in the front of a cooking apparatus 1 shown in FIG. 1 and a direction in front of the cooking apparatus 1, and a rearward direction is referred to as a direction toward the rear of the cooking apparatus 1. Although a cooking apparatus according to one embodiment of the present disclosure is described in a built-in type and installed in a decoration cabinet, the cooking apparatus may also be applied to a cooking apparatus using a heater.

FIG. 1 is a perspective view illustrating the cooking apparatus according to one embodiment of the present invention,

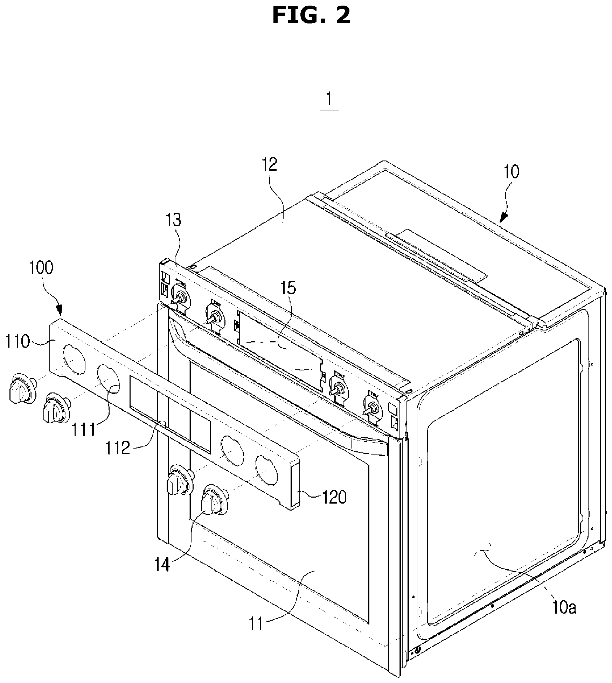

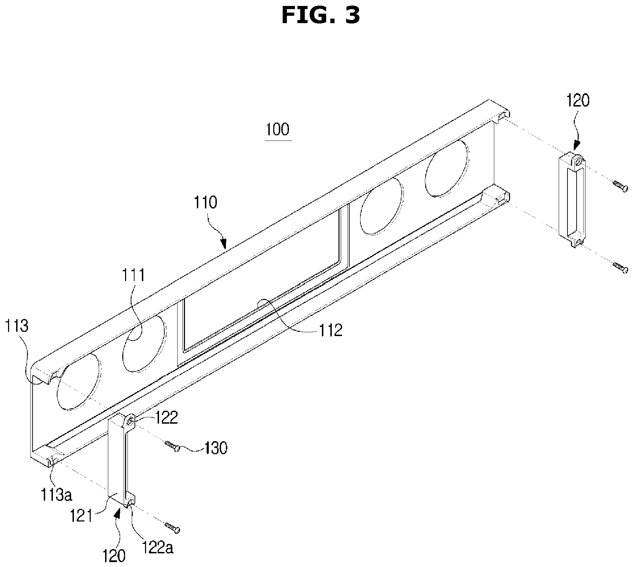

FIG. 2 is an exploded perspective view illustrating a control panel of the cooking apparatus according to one embodiment of the present invention, and FIG. 3 is an exploded perspective view illustrating the control panel according to one embodiment of the present invention.

As shown in FIGS. 1 to 3, the cooking apparatus 1 may be installed inside a piece of furniture, a wall, or a cabinet C to match a kitchen space. For example, the cabinet C in which the cooking apparatus 1 is installed includes an accommodating portion formed such that a front surface thereof is open. The cooking apparatus 1 may be accommodated inside the accommodating portion in the cabinet C.

The cooking apparatus 1 may include a body 10 forming a cooking chamber 10a provided to cook food, a door 11 formed in front of the body 10 and configured to selectively open or close the cooking chamber 10a, and a control panel 100 formed on one side of the body 10 and configured to perform an operation of the cooking apparatus 1. The control panel 100 may be disposed on an upper end of the front surface of the body 10 to receive an operation signal for operating the cooking chamber 10a. A machine room 12 in which a plurality of electronic components are provided may be provided behind the control panel 100.

The body 10 has a hexahedral shape with an open front surface, and the door 11 for opening or closing the open cooking chamber 10a may be installed on the open front surface. The door 11 is provided so that a lower end thereof is hinge-coupled to the body 10 and rotates to be opened or closed.

The present invention is applicable to all household appliances on which a control panel is mounted.

According to the present invention, the control panel 100 is installed on the body 10. The control panel 100 may be installed in front of the body 10. The control panel 100 may be installed above the door 11. The control panel 100 may be installed on a control panel coupler 13 provided above the front surface of the body 10. The control panel coupler 13 may be provided above the front surface of the body 10. The control panel coupler 13 may be provided on one side of the machine room 12 provided above the body 10. The control panel coupler 13 may be provided on a front end of the machine room 12. The control panel 100 may be detachably coupled to the control panel coupler 13.

Levers 14 configured to operate the cooking apparatus 1 may be installed on the control panel 100 of the body 10. The levers 14 may be fixed to the control panel coupler 13 and connected to the machine room 12. Although the levers 14 are exemplarily shown as dials provided to be rotatable, the present disclosure is not limited thereto. For example, the levers 14 may include buttons or touch panels.

A display panel 15 configured to display an operation state of the cooking apparatus 1 may be installed in the control panel 100. The display panel 15 may be provided at the control panel coupler 13.

According to the general disclosure not covered by the present invention, the control panel 100 includes a first panel 110 and a second panel 120 coupled to the first panel 110. According to the present invention, the first panel 110 is a control panel, and the second panel 120 is a control panel bracket, wherein the present invention involves two of these control panel brackets provided to different end portions of the control panel.

The first panel 110 may include an aluminum (Al) material. The first panel 110 is provided so that at least one surface thereof is outwardly exposed. At least one surface of the first panel is provided to be exposed in front of the body 10. The first panel 110 may be formed in a plate shape.

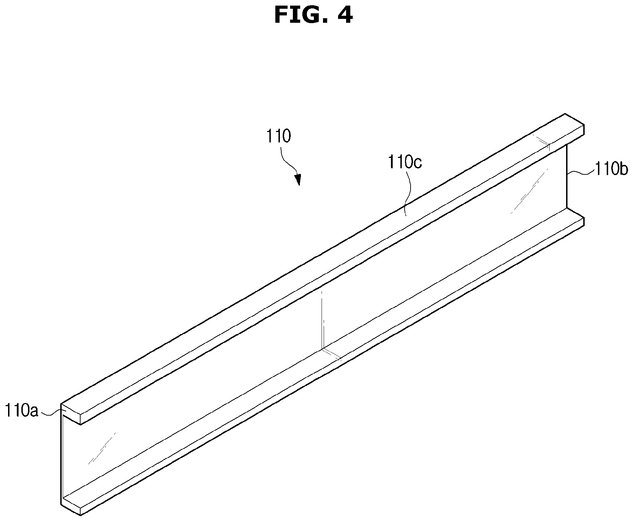

The first panel 110 may include a first surface 110a provided to be exposed in front of the body 10, a second surface 110b formed at a side opposite the first surface 110a, and third surfaces 110c extending at upper and lower sides of the first surface 110a and the second surface 110b. The first surface 110a, the second surface 110b, and the third surfaces 110c may be integrally formed (see FIG. 4).

The first surfaces 110a of the first panel 110 may form a front surface of the control panel 100. The third surfaces 110c may form upper and lower surfaces of the control panel 100. The first panel 110 is formed by an extrusion process. The first panel 110 may be formed to have a thickness of 3 mm or more.

The first panel 110 may include a plurality of installation holes 111 and 112 formed by opening at least a part of the first surface 110a. The installation holes 111 and 112 may include a plurality of first installation holes 111 and a second installation hole 112. The first installation holes 111 may be formed in a circular shape. The plurality of first installation holes 111 may be formed and disposed to be spaced apart at each of a left side and a right side of the first panel 110. Each of the levers 14 may be rotatably coupled to one of the first installation holes 111. The second installation hole 112 may be formed at the center of the first panel 110. The second installation hole 112 is provided so that the display panel 15 is installed therein. The second installation hole 112 may be formed in a quadrangular shape. The second installation hole 112 may be formed in a shape corresponding to the display panel 15. The first installation holes 111 and the second installation hole 112 of the first panel 110 may be formed by a cutting process.

According to the embodiment of the present disclosure, although two first installation holes 111 and two levers 14 installed in the first installation holes 111 are exemplarily shown to be provided on each of a left side and a right side of the display panel 15, the spirit of the present disclosure is not limited thereto. For example, the number of the first installation holes 111 may vary.

Meanwhile, second panel installation portions 113 to which the second panel 120 is coupled are formed on the first panel 110. The second panel installation portions 113 to which the second panel 120 is coupled are formed on the third surface 110c of the first panel 110. The second panel installation portion 113 may be formed on each of end portions of the first panel 110. The second panel installation portions 113 may be formed in a shape corresponding to the second panel 120. The second panel installation portion 113 may include a second panel fixing portion 113a so that the second panel 120 is fixed. The second panel fixing portion 113a may be formed on the third surface 110c of the first panel 110. The second panel fixing portion 113a may include holes to which coupling members 130 such as screws or the like are coupled. According to the embodiment of the present disclosure, although the second panel fixing portion 113a is exemplarily shown to include the holes to which the coupling members are coupled, the spirit of the present disclosure is not limited thereto. For example, the second panel fixing portion 113a may include at least one of a protrusion, a groove, and a hook.

The second panel 120 is formed from aluminium aluminum (Al) and is formed by an extrusion process.

The second panel 120 is provided so that at least one surface thereof is outwardly exposed. At least one surface of the second panel 120 is provided to be exposed in a lateral direction of the body 10. The second panel 120 may be formed in a bar shape. A side surface of the second panel 120 may be provided to form a side surface of the first panel 110.

The second panel 120 includes a second panel body 121 and fixing portions 122 formed on the second panel body 121. The second panel body 121 may be formed in a rectangular parallelepiped shape. A side surface of the second panel body 121 may form the side surface of the first panel 110. The second panel 120 includes the fixing portions 122 to be fixed to the first panel 110. The fixing portions 122 are provided at an upper end portion and a lower end portion of the second panel 120 to fix the first panel 110. The fixing portions 122 may include fixing holes 122a to which the coupling members 130 are coupled.

Accordingly, the second panel 120 may be insertedly disposed in the second panel installation portion 113 of the first panel 110, and the second panel 120 and the first panel 110 may be fixed by the coupling members 130 passing through the fixing holes 122a of the second panel 120. A portion at which the first panel 110 and the second panel 120 are coupled is formed at a rear side of the control panel 100 and is not exposed outside the body 10, and accordingly, an exterior of the body can be improved.

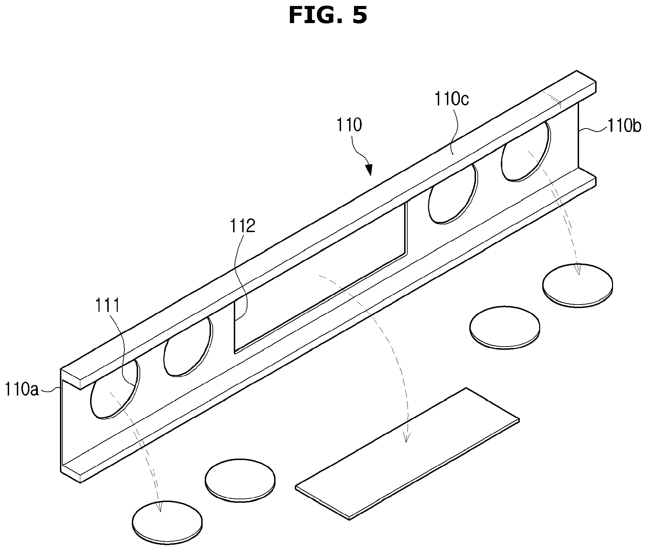

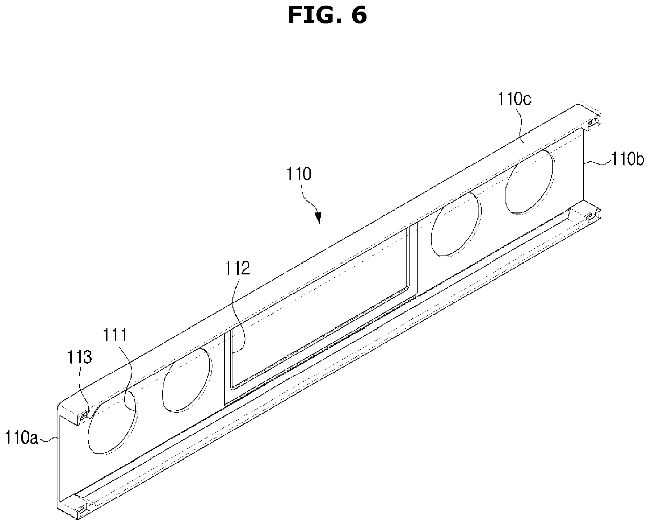

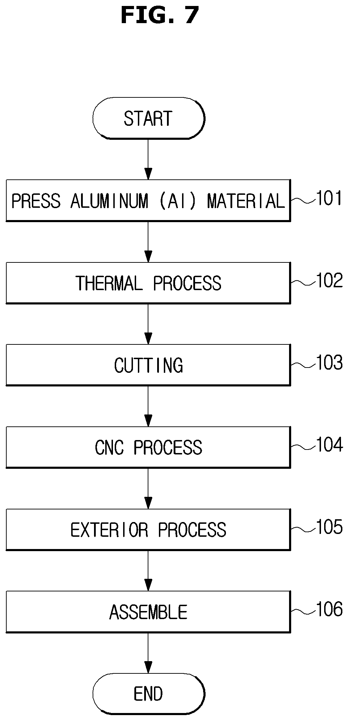

FIG. 4 is a view illustrating an aluminum extrusion process included in a method for manufacturing the control panel according to one embodiment of the present invention, FIG. 5 is a view illustrating a cutting process included in the method for manufacturing the control panel according to one embodiment of the present invention, FIG. 6 is a view illustrating a computer numerical control (CNC) process included in the method for manufacturing the control panel according to one embodiment of the present invention, and FIG. 7 is a flowchart illustrating the method for manufacturing the control panel according to one embodiment of the present invention.

As shown in FIGS. 4 to 7, a method of manufacturing the control panel 100 according to the present invention. According to the present invention, the first panel 110 is a control panel and the second panel is a control panel bracket, wherein the present invention involves two of these control panel brackets provided to different end portions of the control panel.

During the process of extruding or bending the aluminum material, the first panel 110 may form the first surface 110a forming a front surface of the control panel 100, the second surface 110b integrally provided with the first surface 110a on a rear of the first surface 110a, and the third surface 110c which is integrally formed with and bent from the first surface 110a and the second surface 110b.

At this time, the first surface 110a forms an exposed surface in the front of the control panel 100, and the second surface 110b may form an inner surface of the control panel 100 behind the first surface 110a. Also, the third surface 110c may form an upper or lower surface of the control panel 100.

Heat treatments are performed on the first panel 110 and the second panel 120 formed of the extruded aluminum material (102). Heat treatments under the same condition are performed on the first panel 110 and the second panel 120. At this time, a temperature of the heat treatment may be in a range of 180°C to 200 °C, and a time of the heat treatment may be 3.3 hours (HR). The first panel 110 and the second panel 120 on which the heat treatments have been performed are cut (103). The plurality of the first installation holes 111 and the second installation hole 112 are formed in the first panel 110. The first installation holes 111 and the second installation hole 112 of the first panel 110 may be formed by a cutting process.

As shown in FIG. 6, the first panel 110 on which the cutting process has been performed may be formed in a shape including the second panel installation portions 113, the second panel fixing portions 113a, and the like by a CNC process (104).

After the first panel 110 is formed by the CNC process, the first panel 110 may be molded by an exterior process including a hairline process or anodizing process (105).

Meanwhile, since a process of manufacturing the second panel 120 is the same as that of manufacturing the first panel 110, a specific description thereof will be omitted.

In the manufactured first panel 110 and second panel 120, the second panel 120 is inserted into the second panel installation portion 113 of the first panel 110, and the coupling members 130 may pass through the fixing portions 122 of the second panel 120 to be coupled to the second panel fixing portion 113a of the first panel 110 (106).

At this time, the first panel 110 and the second panel 120 may be assembled through at least one method among welding, bonding, riveting, press-fitting, and screwing methods.

Meanwhile, since the manufactured first panel 110 and second panel 120 are formed by the same material and process, exteriors thereof can be improved by matching the materials and designs thereof each other.

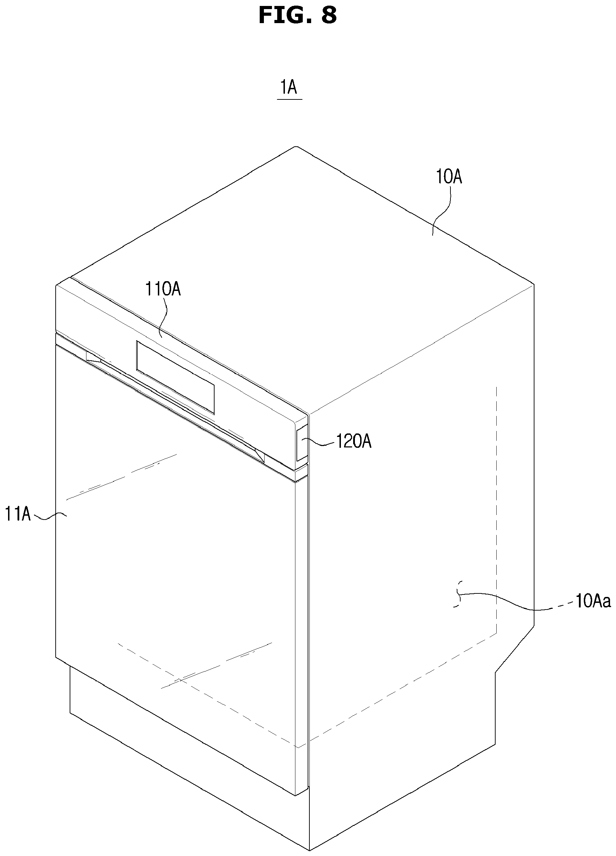

FIG. 8 is a perspective view illustrating a dishwasher to which the control panel according to one embodiment of the present invention is applied.

As shown in FIG. 8, a dishwasher 1A to which a control panel 110A is applied may include a body 10A, a wash tub 10Aa provided inside the body 10A and having a washing space, and a door 11A provided to selectively open or close the washtub 10Aa.

The door 11A is rotatably installed on a lower portion of the body 10A and is provided to open or close the wash tub 10Aa.

The control panel 110A may be mounted on an upper side of a front surface of the body 10A. The control panel 110A is formed by extruding an aluminum (Al) material. The control panel 110A is formed by extruding the aluminum material.

Further, control panel brackets 120A are coupled to the control panel 110A. The control panel bracket 120A is formed by extruding the aluminum (Al) material.

The control panel bracket 120A is further mounted on each end portion of the control panel 110A. Both side surfaces of the control panel bracket 120A may be formed to be exposed outside the control panel 110A.

The control panel 110A and the control panel bracket 120A after the extrusion process are subject to a heat treatment, a cutting process, and a CNC process, and then are remolded.

The control panel 110A and the control panel bracket 120A are molded by at least one process of a hairline process and an anodizing process after the CNC process, and then are assembled, so that the control panel 110A and control panel bracket 120A may be formed of the same material and process.

Accordingly, exteriors of the control panel 110A and control panel bracket 120A are improved because designs thereof match each other.

As is apparent from the above description, the control panel can have improved durability by using an aluminum material, and can have an improved design by matching materials of the control panel.

Also, a process of manufacturing a control panel is simplified, thereby reducing a production time and costs.

## Claims

1. A household appliance (1) comprising:
a body (10); and
a control panel (100) provided on an outer side of the body (10), provided with at least one surface outwardly exposed,
**characterized in that**
the control panel (100) is formed by a process of extruding an aluminum (Al) material; wherein
the control panel (100) comprises two control panel brackets (120A) that are respectively provided to a different end portion of the control panel (100), and wherein
the control panel brackets (120A) are formed of the same material as the control panel (100) and by a process of extruding an aluminum material, the control panel brackets (120A) respectively forming outer side surfaces of the control panel (100).

2. The apparatus according to claim 1, wherein the extruded aluminum control panel (100) is sequentially subject to a heat treatment, a cutting process, and a computer numerical control process, and then is remolded.

3. The apparatus according to claim 2, wherein the extruded aluminum control panel (100) is molded by performing at least one of a hairline process and an anodizing process, after performing the computer numerical control process.

4. The apparatus according to claim 1, wherein the control panel (100) further includes a bent aluminum portion.

5. The apparatus according to claim 2, wherein the extruded aluminum control panel brackets (120A) are sequentially subject to a heat treatment, a cutting process, and a computer numerical control process, and then is remolded.

6. The apparatus according to claim 3, wherein the extruded aluminum control panel brackets (120A) are molded by performing at least one of a hairline process and an anodizing process after performing the computer numerical control process.

7. The apparatus according to claim 1, wherein the control panel (100) and the control panel brackets (120A) are coupled by at least one method among a welding, bonding, riveting, press-fitting, and screwing method.

8. The apparatus according to claim 1, wherein the extruded aluminum control panel (100) includes:
a plurality of first installation holes (111) configured to receive levers mounted on the extruded aluminum control panel (100); and
a second installation hole (112) configured to receive a display panel (15) on the extruded aluminum control panel (100).

9. The apparatus according to claim 1, wherein the extruded aluminum control panel (100) further includes extruded aluminum control panel couplers (13) formed to be coupled to the extruded aluminum control panel brackets (112A).

10. A method of manufacturing a control panel (100) for a household appliance (1), **characterized in that** the method comprising:
extruding an aluminum material to form a control panel (100);
extruding the aluminum material to form two control panel brackets (112A);
performing a heat treatment on the control panel (100) and the control panel brackets (112A);
cutting the control panel (100) to form a plurality of installation holes (111) in the control panel (100);
performing a computer numerical control process on the control panel (100) and the control panel brackets (112A); and
coupling the control panel (100) to the control panel brackets (112A) such that the control panel brackets (112A) are respectively provided to a different end portion of the control panel (100), and such that the control panel brackets (120A) respectively form outer side surfaces of the control panel (100).

11. The method according to claim 10, wherein the control panel (100) and the control panel brackets (112A) are formed by at least one of a hairline process and an anodizing process

12. The method according to claim 10, wherein the control panel (100) and the control panel brackets (112A) are coupled by at least one method among a welding, bonding, riveting, press-fitting, and screwing method.

## Patentansprüche

1. Haushaltsgerät (1), umfassend:
ein Gehäuse (10) und
ein Bedienfeld (100), das an einer Außenseite des Gehäuses (10) vorgesehen ist und bei dem mindestens eine Oberfläche nach außen hin freiliegt,
**dadurch gekennzeichnet, dass**
das Bedienfeld (100) durch ein Verfahren zum Strangpressen eines Aluminium (Al)-Materials gebildet wird; wobei
das Bedienfeld (100) zwei Bedienfeldhalterungen (120A) umfasst, die jeweils an einem anderen Endabschnitt des Bedienfelds (100) vorgesehen sind, und wobei
die Bedienfeldhalterungen (120A) aus dem gleichen Material wie das Bedienfeld (100) und durch ein Verfahren zum Strangpressen eines Aluminiummaterials gebildet sind, wobei die Bedienfeldhalterungen (120A) jeweils äußere Seitenflächen des Bedienfelds (100) bilden.

2. Vorrichtung nach Anspruch 1, wobei das stranggepresste Aluminium-Bedienfeld (100) nacheinander einer Wärmebehandlung, einem Schneideprozess und einem numerischen Computersteuerungsprozess unterzogen und dann umgeformt wird.

3. Vorrichtung nach Anspruch 2, wobei das stranggepresste Aluminium-Bedienfeld (100) nach Durchführung des numerischen Computersteuerungsverfahrens durch Ausführen von mindestens einem von einem Hairline-Verfahren und einem Anodisierungsverfahren geformt wird.

4. Vorrichtung nach Anspruch 1, wobei das Bedienfeld (100) ferner einen gebogenen Aluminiumabschnitt aufweist.

5. Vorrichtung nach Anspruch 2, wobei die stranggepressten Aluminium-Bedienfeldhalterungen (120A) nacheinander einer Wärmebehandlung, einem Schneidprozess und einem numerischen Computersteuerungsprozess unterzogen werden und dann umgeformt werden.

6. Vorrichtung nach Anspruch 3, bei der die stranggepressten Aluminium-Bedienfeldhalterungen (120A) nach Durchführung des numerischen Computersteuerungsprozesses durch einen Hairline-Prozess und/oder einen Anodisierungsprozess geformt werden.

7. Vorrichtung nach Anspruch 1, bei der das Bedienfeld (100) und die Bedienfeldhalterungen (120A) durch mindestens eines der Verfahren Schweißen, Kleben, Nieten, Einpressen und Schrauben miteinander verbunden sind.

8. Vorrichtung nach Anspruch 1, wobei das stranggepresste Aluminium-Bedienfeld (100) umfasst:
eine Vielzahl von ersten Montagelöchern (111), die so konfiguriert sind, dass sie Hebel aufnehmen, die an dem stranggepressten Aluminium-Bedienfeld (100) angebracht sind; und
ein zweites Installationsloch (112), das so konfiguriert ist, dass es eine Anzeigetafel (15) auf dem stranggepressten Aluminium-Bedienfeld (100) aufnimmt.

9. Vorrichtung nach Anspruch 1, wobei das stranggepresste Aluminium-Bedienfeld (100) ferner stranggepresste Aluminium-Bedienfeld-Kupplungen (13) umfasst, die so geformt sind, dass sie mit den stranggepressten Aluminium-Bedienfeld-Halterungen (112A) verbunden werden können.

10. Verfahren zur Herstellung eines Bedienfeldes (100) für ein Haushaltsgerät (1), **dadurch gekennzeichnet, dass** das Verfahren umfasst:
Strangpressen eines Aluminiummaterials zur Herstellung eines Bedienfeldes (100);
Strangpressen des Aluminiummaterials zur Herstellung von zwei Bedienfeld-Halterungen (112A);
Durchführung einer Wärmebehandlung an dem Bedienfeld (100) und den Bedienfeld-Halterungen (112A);
Schneiden des Bedienfeldes (100), um eine Vielzahl von Installationslöchern (111) in dem Bedienfeld (100) zu bilden;
Durchführen eines numerischen Computersteuerungsprozesses an das Bedienfeld (100) und den Bedienfeld-Halterungen (112A); und
Koppeln des Bedienfeldes (100) mit den Bedienfeld-Halterungen (112A), so dass die Bedienfeld-Halterungen (112A) jeweils an einem anderen Endabschnitt des Bedienfeldes (100) vorgesehen sind, und so dass die Bedienfeldhalterungen (120A) jeweils äußere Seitenflächen des Bedienfeldes (100) bilden.

11. Verfahren nach Anspruch 10, bei dem das Bedienfeld (100) und die Bedienfeld-Halterungen (112A) durch mindestens einen der folgenden Prozesse gebildet werden: ein Hairline-Verfahren und ein Anodisierungsverfahren

12. Verfahren nach Anspruch 10, bei dem das Bedienfeld (100) und die Bedienfeld-Halterungen (112A) durch mindestens eine der Methoden Schweißen, Kleben, Nieten, Einpressen und Schrauben verbunden werden.

## Revendications

1. Appareil ménager (1) comprenant :
un corps (10) ; et
un panneau de commande (100) situé sur un côté extérieur du corps (10), dont au moins une surface est exposée vers l'extérieur,
**caractérisé par le fait que**
le panneau de commande (100) est formé par un processus d'extrusion d'un matériau en aluminium (AI) ; dans lequel
le panneau de commande (100) comprend deux supports de panneau de commande (120A) qui sont respectivement fixés à une extrémité différente du panneau de commande (100), et dans lequel
les supports du panneau de commande (120A) sont constitués du même matériau que le panneau de commande (100) et par un processus d'extrusion d'un matériau en aluminium, les supports du panneau de commande (120A) formant respectivement les surfaces latérales extérieures du panneau de commande (100).

2. Appareil selon la revendication 1, dans lequel le panneau de commande en aluminium extrudé (100) est soumis séquentiellement à un traitement thermique, à un processus de découpe et à un processus de commande numérique par ordinateur, puis est remoulé.

3. Appareil selon la revendication 2, dans lequel le panneau de commande en aluminium extrudé (100) est moulé en effectuant au moins l'un des procédés suivants : un procédé de rainurage et un procédé d'anodisation, après l'exécution du procédé de commande numérique par ordinateur.

4. Appareil selon la revendication 1, dans lequel le panneau de commande (100) comprend en outre une partie en aluminium courbée.

5. Appareil selon la revendication 2, dans lequel les supports de panneau de commande en aluminium extrudé (120A) sont soumis séquentiellement à un traitement thermique, à un processus de coupe et à un processus de commande numérique par ordinateur, puis sont remoulés.

6. Appareil selon la revendication 3, dans lequel les supports de panneau de commande en aluminium extrudé (120A) sont moulés en effectuant au moins l'un des procédés suivants : un procédé de rainurage et un procédé d'anodisation après l'exécution du procédé de commande numérique par ordinateur.

7. Appareil selon la revendication 1, dans lequel le panneau de commande (100) et les supports du panneau de commande (120A) sont couplés par au moins une méthode parmi le soudage, le collage, le rivetage, l'emmanchement et le vissage.

8. Appareil selon la revendication 1, dans lequel le panneau de commande en aluminium extrudé (100) comprend :
une pluralité de premiers trous d'installation (111) configurés pour recevoir des leviers montés sur le panneau de commande en aluminium extrudé (100) ; et
un deuxième trou d'installation (112) configuré pour recevoir un panneau d'affichage (15) sur le panneau de commande en aluminium extrudé (100).

9. l'appareil selon la revendication 1, dans lequel le panneau de commande en aluminium extrudé (100) comprend en outre des coupleurs de panneau de commande en aluminium extrudé (13) formés pour être couplés aux supports de panneau de commande en aluminium extrudé (112A).

10. Procédé de fabrication d'un panneau de commande (100) pour un appareil ménager (1), **caractérisé en ce que** le procédé comprend :
extrusion d'un matériau en aluminium pour former un panneau de commande (100) ;
extrusion de l'aluminium pour former deux supports de panneau de commande (112A) ;
effectuer un traitement thermique sur le panneau de commande (100) et les supports du panneau de commande (112A) ;
couper le panneau de commande (100) pour former plusieurs trous d'installation (111) dans le panneau de commande (100) ;
exécuter un processus de commande numérique par ordinateur sur le panneau de commande (100) et les supports du panneau de commande (112A) ; et
coupler le panneau de commande (100) aux supports du panneau de commande (112A) de sorte que les supports du panneau de commande (112A) soient respectivement fournis à une partie d'extrémité différente du panneau de commande (100), et de sorte que les supports du panneau de commande (120A) forment respectivement les surfaces latérales extérieures du panneau de commande (100).

11. Procédé selon la revendication 10, dans laquelle le panneau de commande (100) et les supports du panneau de commande (112A) sont formés par au moins l'un des deux procédés suivants : un procédé d'ébauche et un procédé d'anodisation.

12. Procédé selon la revendication 10, dans laquelle le panneau de commande (100) et les supports du panneau de commande (112A) sont couplés par au moins une méthode parmi les méthodes de soudage, de collage, de rivetage, d'emmanchement et de vissage.
